# EUROPÄISCHE PATENTSCHRIFT

(11) **EP 3 725 042 B1**
(45) Veröffentlichungstag und Bekanntmachung des Hinweises auf die Patenterteilung: **15.02.2023**
(21) Anmeldenummer: 18833513.7
(22) Anmeldetag: 05.12.2018
(51) Int. Cl.: H04L 12/40

(54) **TEILNEHMER EINES BUSSYSTEMS, VERFAHREN ZUM BETRIEB UND EIN BUSSYSTEM**
SUBSCRIBER IN A BUS SYSTEM, METHOD FOR OPERATION AND A BUS SYSTEM
ABONNÉ D'UN SYSTÈME DE BUS, PROCÉDÉ POUR LE FAIRE FONCTIONNER ET SYSTÈME DE BUS

(30) Priorität: 12.12.2017 DE 102017011458
(43) Veröffentlichungstag der Anmeldung: 21.10.2020
(73) Patentinhaber: WAGO Verwaltungsgesellschaft mit beschränkter Haftung, 32423 Minden (DE)
(72) Erfinder: JEROLM, Daniel, 49152 Bad Essen (DE)
(74) Vertreter: Koplin, Moritz
(86) Internationale Anmeldenummer: PCT/IB2018/059654
(87) Internationale Veröffentlichungsnummer: WO 2019/116168

(56) Entgegenhaltungen:
- EP-A1- 1 748 338
- EP-A1- 1 881 652
- DE-A1- 10 148 325
- DE-A1-102010 041 363

## Beschreibung

Die Erfindung betrifft einen Teilnehmer eines Bussystems, ein Verfahren zum Betrieb eines Bussystems und ein Bussystem.

Synchronisationsverfahren für Bussysteme sind im Stand der Technik bekannt. Die DE 10 2013 020 802 A1 betrifft ein Verfahren für eine Referenznachrichtenbasierte Zeitsynchronisation in einem CAN-Netzwerk eines Kraftfahrzeuges, bei welchem von einem Zeitmaster an einen Zeitslave eine, mit einer Zeitstempelinformation versehene Sync-Nachricht und anschließend eine Nachricht zur Übertragung der senderseitigen Zeitstempelinformation übertragen wird. Bei einem Verfahren, bei welchem die Buslast reduziert wird, wird als Sync-Nachricht eine bereits vorhandene, zyklisch versendete CAN-Nachricht verwendet.

Aus der DE 199 17 354 A1 ist ein Synchronisationsverfahren und ein hiermit korrespondierendes Kommunikationssystem sowie Haupteinheit und Nebeneinheit eines derartigen Kommunikationssystems bekannt. Interne Zeitgeber einer Haupteinheit und mindestens einer Nebeneinheit sollen miteinander synchronisiert werden. Hierzu übermittelt die Haupteinheit der Nebeneinheit über zwei Kommunikationswege Zeitsignale. Diese benötigen auf den beiden Kommunikationswegen Laufzeiten zur Nebeneinheit. Die Differenz der Laufzeiten wird zumindest in der Nebeneinheit erfasst. Aus der Differenz werden die Laufzeiten ermittelt. Danach synchronisieren sich die Zeitgeber unter Berücksichtigung der Laufzeiten.

Aus der EP 1 748 338 A1 ist ein Verfahren zur Optimierung der Bandbreitenausnutzung bei Bussystemen bekannt. Da ein Teilnehmer den Endempfänger nicht direkt adressiert, sondern immer nur seinen benachbarten Teilnehmer auf dem Weg zu dem Endempfänger, wird durch gemeinsame Nutzung des Datentelegramms die Zahl der Datentelegramme drastisch reduziert. Im Idealfall auf ein Datentelegramm pro Verbindungsstrecke.

Aus der DE 101 48 325 A1 ist ein zentraler Knoten eines Datenbussystems mit einer Buswächtereinheit bekannt, die Empfangsmittel zum Erfassen der Signale auf dem Datenbus und Auswertungsmittel aufweist. Aus der EP 1 881 652 A1 ist ebenfalls ein Feldbussystem mit einem Knoten mit integrierter Buswächtereinheit bekannt.

Aus der DE 10 2010 041 363 A1 ist eine Vorrichtung zur Bereitstellung einer globalen Zeitinformation in ereignisgesteuerter Buskommunikation eines CAN-Bussystems bekannt.

Die EP 1 368 728 B1 betrifft ein synchrones, getaktetes Kommunikationssystem, beispielsweise ein verteiltes Automatisierungssystem, dessen Teilnehmer, beliebige Automatisierungskomponenten sein können und die über ein Datennetz zwecks gegenseitigen Datenaustauschs miteinander gekoppelt sind. Als Datennetz des Kommunikationssystems sind dabei alle möglichen Bussysteme wie z.B. Feldbus, Profibus, Ethernet, Industrial Ethernet, etc. denkbar. Ein Teilnehmer des Kommunikationssystems ist als Taktschläger ausgezeichnet und sorgt für die Verteilung und Einhaltung des verwendeten Kommunikationstakts an alle Teilnehmer und von allen Teilnehmern. Über denselben Mechanismus kann der Taktschläger auch eine Relativuhr im ganzen Kommunikationssystem bei allen Teilnehmern einführen. Dieser Teilnehmer ist damit ebenfalls Master über die Relativuhr bzw. die geltende Relativzeit. Alle Teilnehmer des Kommunikationssystems sind daher permanent auf die systemweit geltende Relativuhr mit der gültigen Relativzeit synchronisiert und haben deshalb zu jeder Zeit dasselbe Zeitverständnis. Die Realisierung von applikativen Sequenzen, Synchronisierung von gleichzeitig eintretenden Ereignissen, zeitliche Genauigkeit bei der Erfassung von Ereignissen bzw. Schalten von Ausgängen soll dadurch deutlich verbessert bzw. erst ermöglicht werden.

Aus der DE 10 2013 218 328 B3 ist ein Verfahren zur Lokalisierung einer Frequenzabweichung in einem Kommunikationsnetz bekannt. Ein Referenzknoten und die einzelnen Netzknoten kommunizieren in einer Reihe miteinander, wobei Synchronisationsnachrichten vom Referenzknoten an den Netzknoten und von diesem an den nächsten Netzknoten usw. bis zum letzten Netzknoten übermittelt werden. Um eine exakte Zeitsynchronisation in den einzelnen Netzknoten zu erreichen, muss der Referenzuhr-Taktzählzustand in den Synchronisationsnachrichten in den einzelnen Netzknoten aktualisiert werden. Deshalb ist in jedem Netzknoten eine Zeitverzögerung bekannt, die zwischen dem Aussenden einer Synchronisationsnachricht SM vom vorhergehenden Netzknoten (bzw. vom Referenzknoten) bis zum Aussenden der Synchronisationsnachricht vom jeweiligen Netzknoten zum nächsten Netzknoten benötigt wird. Diese Zeitverzögerung setzt sich aus zwei Zeitspannen zusammen, wobei diese Zeitspannen für jeden Netzknoten unterschiedlich sein kann. Die erste ist hierbei die Zeitspanne, welche zur Übermittlung der Nachricht vom vorhergehenden Netzknoten zum jeweiligen Netzknoten benötigt wird (Line Delay). Die zweite ist eine Verarbeitungszeit, welche im Netzknoten zum Verarbeiten einer empfangenen Synchronisationsnachricht bis zum Aussenden der Synchronisationsnachricht in einem neuen Telegramm zum nächsten Netzknoten benötigt wird (Bridge Delay). Diese Verzögerungszeit wird in dem jeweiligen Netzknoten in Takten gemäß der Knotentaktfrequenz angegeben.

Aus Frame Forward Mechanism of a Real-time Ethernet", 2013, IEEE International Conference on Signal Processing, Communication and Computing (ICSPCC 2013) ist bekannt, dass in einem Downstream Frame Daten von einem Master an die Slaves gesendet werden. In jedem Slave ist ein Forwarding Channel vorgesehen, der den Frame zum nächsten Slave ohne Modifikationen direkt weiterleitet. Ein Upload-Stream dient zum Einsammeln der Daten der Slaves. Dabei hängt jeder Slave an das Ende des Frames seine Daten an.

Der vorliegenden Erfindung liegt die Aufgabe zu Grunde, einen Teilnehmer eines Bussystems anzugeben, der für eine möglichst verbesserte Synchronisation eingerichtet ist.

Diese Aufgabe wird durch die Merkmale des Anspruchs 1 gelöst. Vorteilhafte Weiterbildungen sind durch Merkmale der abhängigen Ansprüche angegeben.

Demzufolge ist ein Teilnehmer eines Bussystems mit einem Zeitgeber und mit einer Sende-Empfangs-Schaltung vorgesehen. Der Teilnehmer ist dabei zur Kommunikation mit anderen Teilnehmern des Bussystems eingerichtet. Der Zeitgeber ermöglicht dem Teilnehmer zu bestimmten Zeitpunkten Aktionen durchzuführen, beispielweise Steuerdaten an Ausgangsanschlüssen auszugeben oder Messdaten abzutasten.

Die Sende-Empfangs-Schaltung ist eingerichtet, ein Datenpaket mit einem Zeitstempelwert über einen Bus zu empfangen. Der Teilnehmer ist vorteilhafterweise eingerichtet, mittels der Sende-Empfangs-Schaltung zusätzlich weitere Datenpakete - beispielweise mit Prozessdaten - zu empfangen und ggf. zu senden. Das Datenpaket mit dem Zeitstempelwert ist dem Zeitgeber beispielweise mittels einer Kennung zugeordnet.

Der Zeitgeber ist zur Synchronisation basierend auf dem Zeitstempelwert eingerichtet. Zur Synchronisation wird beispielweise ein Zeitwert eines Zeitzählers an den Zeitstempelwert ggf. unter Einbezug eines Offsetwertes angepasst und läuft dann analog einer Uhr weiter.

Der Zeitgeber ist eingerichtet, den Zeitstempelwert zu ändern. Zur Änderung des Zeitstempelwerts wird dieser beispielweise überschrieben.

Die Sende-Empfangs-Schaltung ist eingerichtet, das Datenpaket mit geänderten Zeitstempelwert über den Bus zu senden. Dabei ist das gesendete Datenpaket das empfangene Datenpaket. Der Teilnehmer ist nicht eingerichtet, ein Datenpaket mit einem Zeitstempel zu erzeugen. Es wird dasselbe Datenpaket gesendet, was auch empfangen wurde, jedoch mit geänderten Daten.

Gemäß einer vorteilhaften Weiterbildung ist die Sende-Empfangs-Schaltung eingerichtet, einen ersten Teil des Datenpakets über den Bus zu senden und zeitgleich einen zweiten Teil des Datenpakets über den Bus zu empfangen. Die Verzögerung durch die Sende-Empfangs-Schaltung zwischen Empfangen und Senden ist daher signifikant kürzer als der Empfang des gesamten Datenpakets. Beispielsweise beträgt die Verzögerung nur wenige Takte. Dennoch erfolgt keine reine Weiterleitung des Datenpakets sondern das Datenpaket wird während des Empfangens und Sendens geändert, zumindest indem der Zeitstempelwert geändert wird. Zusätzlich kann auch ein Prüfwert (CRC) geändert werden. Dennoch handelt es sich um dasselbe Datenpaket, da durch den Teilnehmer kein neues Datenpaket erzeugt wird.

Gemäß einer vorteilhaften Weiterbildung weist das Datenpaket eine Vielzahl von Datensymbolen auf. Ein Datensymbol weist eine insbesondere feste Anzahl von Bits auf. Beispielweise weist ein Datensymbol 4, 8, 16 oder 32 Bit auf. Vorteilhafterweise weist der Zeitstempelwert des Datenpakets eine Mehrzahl von Datensymbolen auf. Die Sende-Empfangs-Schaltung ist vorteilhafterweise eingerichtet, das Datenpaket symbolweise zu empfangen und zu senden. Durch das symbolweise Empfangen und Senden wird vorzugsweise ein Datensymbol empfangen und sofort wieder gesendet, so dass vorzugsweise im Teilnehmer immer nur genau eine feste Teilmenge von Datensymbolen, insbesondere nur genau ein Datensymbol, zur Bearbeitung ansteht. Vorzugsweise erfolgt das symbolweise Empfangen und Senden des Datenpakets derart, dass das Senden eines Datensymbols des Datenpakets und das Empfangen eines nachfolgenden Datensymbols des Datenpakets gleichzeitig erfolgen. Bevorzugt ist die Sende-Empfangs-Schaltung des Teilnehmers eingerichtet, die Bits eines Datensymbols seriell zu empfangen und zu senden.

Gemäß einer vorteilhaften Weiterbildung ist der Zeitgeber des Teilnehmers eingerichtet, das vom Zeitstempelwert zuerst empfangene Datensymbol mit einem niedrigsten Stellenwert des Zeitstempelwerts zu ändern und an einen nachfolgenden Teilnehmer zu senden vor dem Empfang des Datensymbols mit einem höchsten Stellenwert des Zeitstempelwerts.

Gemäß einer vorteilhaften Weiterbildung weist der Zeitgeber einen Zeitzähler auf. Vorteilhafterweise weist der Zeitgeber eine State-Machine auf. Die State-Machine kann auch als Zustandsautomat bezeichnet werden. Die State-Machine ist vorteilhafterweise zur Synchronisation des Zeitzählers basierend auf dem empfangenen Zeitstempelwert eingerichtet. Die State-Machine ist vorteilhafterweise zur Änderung des Zeitstempelwerts eingerichtet.

Gemäß einer vorteilhaften Weiterbildung weist der Teilnehmer einen insbesondere nicht-flüchtigen Speicher zur Speicherung eines Korrekturwerts auf. Die Änderung des Zeitstempelwerts basiert dabei auf dem gespeicherten Korrekturwert.

Gemäß einer vorteilhaften Weiterbildung basiert der Korrekturwert auf einer Verzögerung zwischen Empfang und Senden eines Beginns des Datenpakets durch die Sende-Empfangs-Schaltung und auf einer Verzögerung durch das Senden über eine Übertragungsstrecke des Busses insbesondere zum nachfolgenden Teilnehmer. Idealerweise entspricht der Korrekturwert der Gesamtverzögerung durch den in den Bus eingefügten Teilnehmer. Wird der Teilnehmer aus dem Bus entfernt, so heben sich Verzögerung und Korrekturwert überwiegend, idealerweise vollständig auf. Hierdurch kann der nachfolgende Teilnehmer auf bei entferntem Teilnehmer den zumindest annähernd richtigen Zeitstempelwert erhalten. Vorteilhafterweise ist der Korrekturwert für mehrere aufeinander folgende Datenpakete konstant. Das schließt nicht aus, dass der Korrekturwert verändert wird, sollte sich beispielsweise die Übertragungsstrecke ändern. Nach der Veränderung der Korrekturwertes ist dieser wiederum für aufeinander folgende Datenpakete konstant.

Der vorliegenden Erfindung liegt zudem die Aufgabe zu Grunde, ein Verfahren zum Betrieb eines Bussystems anzugeben, das eine möglichst verbesserte Synchronisation bewirkt.

Diese Aufgabe wird durch die Merkmale des Anspruchs 9 gelöst. Vorteilhafte Weiterbildungen sind durch Merkmale der abhängigen Ansprüche angegeben.

Demzufolge ist ein Verfahren zum Betrieb eines Bussystems mit einem ersten Teilnehmer und einem zweiten Teilnehmer vorgesehen.

In dem Verfahren wird ein Datenpaket durch den ersten Teilnehmer empfangen und gesendet. Dabei ist es nicht erforderlich, dass das Datenpaket vor dem Senden vollständig empfangen wurde. Vorzugsweise wird ein erster zuvor empfangener Teil des Datenpakets durch den ersten Teilnehmer bereits gesendet, bevor ein zweiter Teil des Datenpakets durch den ersten Teilnehmer empfangen wird.

In dem Verfahren wird ein Zeitgeber des ersten Teilnehmers basierend auf einem im Datenpaket enthaltenen Zeitstempelwert synchronisiert.

In dem Verfahren wird der Zeitstempelwert durch den ersten Teilnehmer geändert.

In dem Verfahren wird der geänderte Zeitstempelwert mittels des Datenpakets durch den ersten Teilnehmer an einen zweiten Teilnehmer gesendet.

Gemäß einer vorteilhaften Weiterbildung wird der Zeitstempelwert durch den ersten Teilnehmer während des Sendens und des Empfangens des Datenpakets geändert. Hierdurch kann eine sehr schnelle Synchronisation aller Zeitgeber in dem Bussystem erzielt werden, wobei die Gesamtsynchronisation maßgeblich durch die Summe der geringen Verzögerungen der einzelnen Teilnehmer geprägt ist.

Gemäß einer vorteilhaften Weiterbildung wird vor dem Empfang des Datenpakets durch den ersten Teilnehmer eine durch den ersten Teilnehmer verursachte Laufzeitverzögerung ermittelt. Die Ermittlung der Laufzeitverzögerung erfolgt beispielweise durch ein externes Gerät, durch den ersten Teilnehmer selbst und/oder durch einen weiteren Teilnehmer des Bussystems. Vorteilhafterweise wird basierend auf der ermittelten Laufzeitverzögerung ein Korrekturwert ermittelt. Vorteilhafterweise wird der Korrekturwert gespeichert. Vorteilhafterweise basiert die Änderung des Zeitstempelwerts auf dem gespeicherten Korrekturwert.

Gemäß einer vorteilhaften Weiterbildung wird der geänderte Zeitstempelwert durch eine Funktion mit dem empfangenen Zeitstempelwert und dem Korrekturwert bestimmt. Vorteilhafterweise wird der geänderte Zeitstempelwert bestimmt durch eine Summe aus empfangenem Zeitstempelwert und Korrekturwert.

Der vorliegenden Erfindung liegt zudem die Aufgabe zu Grunde, ein Bussystem anzugeben, das für eine möglichst verbesserte Synchronisation eingerichtet ist.

Diese Aufgabe wird durch die Merkmale des Anspruchs 14 gelöst. Vorteilhafte Weiterbildungen sind durch Merkmale der abhängigen Ansprüche angegeben.

Demzufolge ist ein Bussystem mit einem als ersten Slave ausgebildeten ersten Teilnehmer, mit einem als zweiten Slave ausgebildeten zweiten Teilnehmer, mit einem Master und mit einem Bus vorgesehen.

Der Master und der erste Slave und der zweite Slave sind über den Bus zur Übertragung eines Datenpakets derart verbunden, dass das vom Master gesendete Datenpaket den ersten Slave und den zweiten Slave in einer festen Reihenfolge durchläuft. Beispielsweise durchläuft das Datenpaket in der Reihenfolge zuerst den ersten Slave und danach den zweiten Slave.

Der Master ist eingerichtet, in dem Datenpaket einen Zeitstempelwert zu senden.

Der erste Slave ist eingerichtet, das Datenpaket mit dem Zeitstempelwert zu empfangen.

Der erste Slave ist eingerichtet, seinen Zeitgeber basierend auf dem Zeitstempelwert zu synchronisieren.

Der erste Slave ist eingerichtet, den Zeitstempelwert zu ändern und den geänderten Zeitstempelwert in dem Datenpaket an den zweiten Slave zu senden.

Der zweite Slave ist eingerichtet, das Datenpaket mit dem geänderten Zeitstempelwert zu empfangen und seinen Zeitgeber basierend auf dem geänderten Zeitstempelwert zu synchronisieren.

Gemäß einer vorteilhaften Weiterbildung weist das Bussystem eine erste Schnittstellenvorrichtung auf. Vorteilhafterweise ist der erste Slave aus dem Bussystem durch Lösen von der ersten Schnittstellenvorrichtung entfernbar. Vorteilhafterweise weist die erste Schnittstellenvorrichtung eine erste Schaltvorrichtung auf, die einen Bypass zum zweiten Slave bewirkt. Damit ist das erste Datenpaket bei entferntem ersten Slave nicht vom ersten Slave sondern vom zweiten Slave mit nicht-geändertem Zeitstempelwert empfangbar.

Gemäß einer vorteilhaften Weiterbildung weist das Bussystem eine Anzahl weiterer Slaves auf. Vorteilhafterweise durchläuft das Datenpaket alle Slaves des Bussystems in einer festen Reihenfolge. Vorteilhafterweise ist jeder Slave eingerichtet, den Zeitstempelwert im Datenpaket zu ändern und den geänderten Zeitstempelwert an den in der Reihenfolge nachfolgenden Slave über den Bus weiterzuleiten. Vorteilhafterweise ist der letzte Slave in der Reihenfolge eingerichtet, das Datenpaket über den Bus zurück an den Master zu senden.

Gemäß einer vorteilhaften Weiterbildung weist der Master einen Master-Zeitgeber auf. Vorteilhafterweise ist der Master eingerichtet, das Datenpaket zu erzeugen und den Zeitstempelwert basierend auf dem Master-Zeitgeber zu bestimmen und in das Datenpaket einzugeben.

Gemäß einer vorteilhaften Weiterbildung weist der Master eine Bus-Schnittstelle zu einem übergeordneten Bus auf. Vorteilhafterweise ist der Master eingerichtet, basierend auf einem über den übergeordneten Bus empfangenen Telegramm seinen Master-Zeitgeber zu synchronisieren. Dabei sind Telegramm und Datenpaket verschieden. Beispielweise weisen Telegramm und Datenpaket unterschiedliche Protokolle auf.

Die Erfindung ist dabei nicht auf die zuvor erläuterten Merkmale und Kombinationen von Merkmalen beschränkt. Weitere Merkmale, Merkmalskombinationen und vorteilhafte Ausgestaltungen ergeben sich aus der nachfolgenden Figurenbeschreibung.

Dabei zeigen
- Figur 1: eine schematische Darstellung eines Bussystems,
- Figur 2: eine schematische Darstellung eines Datenpakets und eines Bussystems, und
- Figur 3: eine schematische Darstellung eines als Slave ausgebildeten Teilnehmers eines Bussystems.

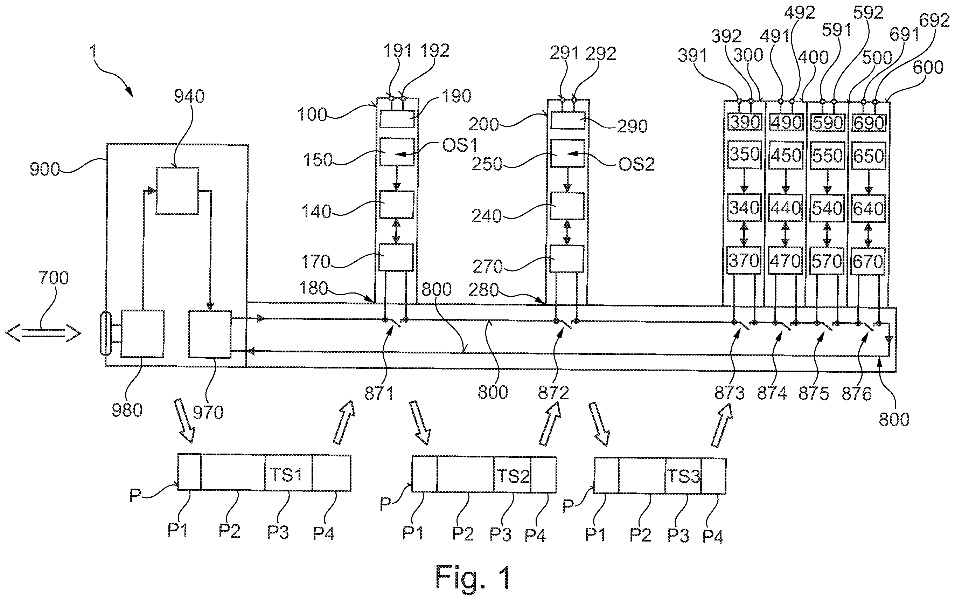

In Figur 1 ist ein Bussystem 1 schematisch dargestellt. Das Bussystem 1 weist einen als Koppler ausgebildeten Master 900, einen ersten Slave 100, einen zweiten Slave 200 und eine Anzahl weiterer Slaves 300, 400, 500, 600 auf. Der Master 900 kann auch als Controller oder Kopfstation bezeichnet werden. Die Slaves 100, 200, 300, 400, 500, 600 können auch als I/O-Module bezeichnet werden. Das Bussystem 1 im Ausführungsbeispiel der Figur 1 ist als Master-Slave-Bussystem ausgebildet, wobei der Master 900 über den Bus 800 mit den Slaves 100, 200, 300, 400, 500, 600 zur Übertragung eines Datenpakets P verbunden ist.

Im Ausführungsbeispiel der Figur 1 durchläuft das vom Master 900 gesendete Datenpaket P die Slaves 100, 200, 300, 400, 500, 600 in einer festen Reihenfolge. Im Ausführungsbeispiel der Figur 1 ist gezeigt, dass das Datenpaket P zunächst den ersten Slave 100, dann den zweiten Slave 200, dann den dritten Slave 300, dann den vierten Slave 400, dann den fünften Slave 500 und zum Schluss den sechsten Slave 600 in einer festen Reihenfolge durchläuft. Wird ein Slave hinzugefügt oder eins der vorhandenen Slaves deaktiviert oder aus dem Bus entfernt, ändert sich die Reihenfolge und das Datenpaket P würde eine neue feste Reihenfolge durchlaufen. Fest ist die Reihenfolge sofern alle an der Buskommunikation teilnehmenden Slaves 100, 200, 300, 400, 500, 600 an Ort und Stelle und aktiviert verbleiben.

Der Master 900 weist einen Master-Zeitgeber 940 auf. Der Master 900 ist eingerichtet, mittels einer Sende-Empfangs-Schaltung 970 das Datenpaket P zu erzeugen und auf dem Bus 800 zu senden. Der Master 900 ist eingerichtet, in dem Datenpaket P einen Zeitstempelwert TS1 zu senden. Im Ausführungsbeispiel der Figur 1 ist das Datenpaket P schematisch dargestellt. Das Datenpaket P weist einen Kopf P1, Datenfelder P2, P3 und ein Feld P4 für einen Prüfwert (CRC - engl. Cyclic Redundancy Check) auf. Im Datenfeld P3 ist der vom Master 900 gesendete Zeitstempelwert TS1 gezeigt.

Der erste Slave 100 weist eine Sende-Empfangs-Schaltung 170 auf. Weiterhin weist der erste Slave 100 einen Zeitgeber 140, einen Speicherbereich 150 und eine Eingabe-Ausgabe-Schaltung 190 auf. Die Eingabe-Ausgabe-Schaltung 190 ist mit Anschlüssen 191, 192 zum Anschluss von Kabeln, Lichtleitern oder dergleichen verbunden, um analoge und/oder digitale Ein- und/oder Ausgangssignale für einen Prozess einzulesen, bzw. auszugeben. Weiterhin weist der erste Slave 100 eine elektrische und mechanische Schnittstellenvorrichtung 180 zum Lösen und Verbinden mit dem Bus 800 auf.

Die weiteren Slaves 200, 300, 400, 500, 600 können ähnlich oder identisch aufgebaut sein. Jeder Slave 100, 200, 300, 400, 500, 600 weist entsprechend eine Schnittstellenvorrichtung 180, 280, 380, 480, 580, 680, eine Sende-Empfangs-Schaltung 170, 270, 370, 470, 570, 670, einen Zeitgeber 140, 240, 340, 440, 540, 640, einen Speicherbereich 150, 250, 350, 450, 550, 650 eine Eingabe-Ausgabe-Schaltung 190, 290, 390, 490, 590, 690 und ggf. Ein- und/ oder Ausgänge 191, 192, 291, 292, 391, 392, 491, 492, 591, 592, 691, 692 zum Anschluss externer Geräte auf. Die Erfindung ist nicht auf die in Figur 1 dargestellte Anzahl von Slaves 100, 200, 300, 400, 500, 600 im Bussystem 1 begrenzt. Es kann je nach Anwendungsfall eine kleinere oder größere Anzahl von Slaves vorgesehen sein. In Figur 1 sind zwischen dem ersten Master 900, dem ersten Slave 100, dem zweiten Slave 200 und dem dritten Slave 300 dargestellt, in die weitere Slaves (nicht dargestellt) in das Bussystem 1 eingefügt werden können.

Das vom Master 900 gesendete Datenpaket P gelangt über den Bus 800 zum ersten Slave 100. Der erste Slave 100 ist eingerichtet, mittels der Sende-Empfangs-Schaltung 170 das Datenpaket P mit dem vom Master 900 gesendeten Zeitstempelwert TS1 zu empfangen. Der erste Slave 100 weist den mit der Sende-Empfangs-Schaltung 170 verbundenen Zeitgeber 140 auf und ist eingerichtet, seinen Zeitgeber 140 basierend auf dem Zeitstempelwert TS1 zu synchronisieren.

Im Ausführungsbeispiel der Figur 1 sendet der erste Slave 100 das Datenpaket P weiter an den zweiten Slave 200 in der festen Reihenfolge. Das gleiche Datenpaket P ist zwischen Empfang und Senden überwiegend unverändert. Der erste Slave 100 ist eingerichtet, den empfangen Zeitstempelwert TS1 zu ändern und den geänderten Zeitstempelwert TS2 in dem Datenpaket P an den zweiten Slave 200 zu senden. In Figur 1 ist der geänderte Zeitstempelwert TS2 gezeigt.

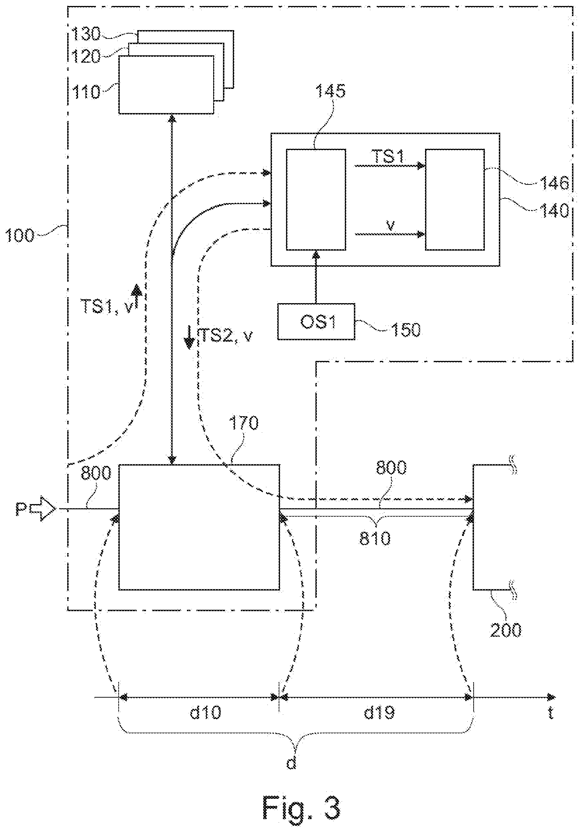

Der erste Slave 100 ist zum Ändern des empfangenen Zeitstempelwerts TS1 eingerichtet, indem ein erster Korrekturwert OS1 durch den ersten Slave 100 verwendet wird. Im einfachsten Fall wird der erste Korrekturwert OS1 auf den empfangenen Zeitstempelwert TS1 aufaddiert, die Summe aus erstem Korrekturwert OS1 und empfangenen Zeitstempelwert TS1 ist dabei der geänderte Zeitstempelwert TS2. Im Ausführungsbeispiel der Figur 1 ist der erste Korrekturwert OS1 im Speicherbereich 150 des ersten Slaves 100 gespeichert. Beispielsweise wird der Korrekturwert OS1 bereits werkseitig bestimmt und im Speicherbereich 150 abgelegt, wobei der Speicherbereich 150 vorteilhafterweise Bestandteil eines nicht-flüchtigen Speichers, beispielsweise eines Flashspeichers ist. In einem anderen Ausführungsbeispiel wird der Korrekturwert OS1 während des Betriebs des Bussystems 1 ermittelt. Dabei kann ein Slave 100, 200, 300, 400, 500, 600 im Bussystem 1 Messwerte aufnehmen, wobei die Messwerte beispielsweise von einer Laufzeitverzögerung d19 durch eine Übertragungsstrecke 810 abhängig sind, wie dies in Figur 3 schematisch dargestellt ist. Vorteilhafterweise werden die Messwerte mehrerer Slaves 100, 200, 300, 400, 500, 600 des Bussystems 1 durch den Master 900 auswertet. Durch den Master 900 wird der Korrekturwert OS1 basierend auf Messwerten bestimmt und der Korrekturwert OS1 an den Slave 100 übertragen. Insofern ist ein werkseitiger Korrekturwert OS1 nicht zwingend erforderlich. Bevorzugt ist jedoch ein werkseitiger Korrekturwert OS1 im Speicherbereich 150 gespeichert, der durch den Master 900 durch einen möglichst genaueren ermittelten neuen Korrekturwert OS1 überschrieben wird.

Bei dem dargestellten Datenpaket P handelt es sich um dasselbe Datenpaket P mit lediglich geändertem Zeitstempelwert TS2 und geändertem Prüfwert. Das Datenpaket P ist durch den ersten Slave 100 überwiegend unverändert durchgeschleift, wobei das Datenpaket P nicht neu erzeugt wurde und daher Struktur, Länge und ggf. Paket-Identifikation beibehält. Dadurch, dass der erste Slave 100 kein neues Datenpaket P erzeugen muss, können Latenzen in der Übertragung des Zeitstempelwertes TS1, TS2 minimiert werden.

Der zweite Slave 200 ist eingerichtet, das Datenpaket P mit dem geänderten Zeitstempelwert TS2 zu empfangen und seinen Zeitgeber 240 basierend auf dem geänderten Zeitstempelwert TS2 zu synchronisieren. Der zweite Slave 200 ist eingerichtet, den empfangenen Zeitstempelwert TS2 basierend auf einem zweiten Korrekturwert OS2 in seinem Speicherbereich 250 zu ändern und den geänderten Zeitstempelwert TS3 in dem Datenpaket P an den dritten Slave 300 zu senden. In Figur 1 ist der erneut geänderte Zeitstempelwert TS3 gezeigt. Gleiches gilt im Ausführungsbeispiel der Figur 1 auch für den dritten, vierten, fünften und sechsten Slave 300, 400, 500, 600, die jeweils eine Zeitstempelwertänderung durchführen. Entsprechend ist jeder Slave 100, 200, 300, 400, 500, 600 eingerichtet, den Zeitstempelwert TS... im Datenpaket P zu ändern und den geänderten Zeitstempelwert an den in der Reihenfolge nachfolgenden Slave 200, 300, 400, 500, 600 über den Bus 800 weiterzuleiten. Der letzte Slave 600 in der Reihenfolge ist eingerichtet, das Datenpaket P über den Bus 800 zurück an den Master 900 zu senden. Entsprechend wird dasselbe Datenpaket P vom Master 900 gesendet, durchläuft alle Slaves 100, 200, 300, 400, 500, 600 und gelangt am Ende zurück zum Master 900 und wird vom Master 900 mittels der Sende-Empfangs-Schaltung 970 empfangen. Im Ausführungsbeispiel der Figur 1 ist der Bus 800 daher als Ringbus ausgebildet.

Im Ausführungsbeispiel der Figur 1 ist eine erste Schnittstellenvorrichtung 180 vorgesehen. Der erste Slave 100 ist aus dem Bussystem 1 durch Lösen von der Schnittstellenvorrichtung 180 entfernbar. Die Schnittstellenvorrichtung 180 weist hierzu beispielsweise elektrische Kontakte und mechanische Befestigungsmittel auf. Die erste Schnittstellenvorrichtung weist weiterhin eine erste Schaltvorrichtung 871 auf, die einen Bypass vom Master 900 zum zweiten Slave 200 bewirkt. Bei geschlossener erster Schaltvorrichtung 871 und damit aktiviertem Bypass ist das erste Datenpaket P bei entferntem ersten Slave 100 nicht vom ersten Slave 100 sondern vom zweiten Slave 200 mit nicht-geändertem Zeitstempelwert TS1 empfangbar (in Figur 1 nicht dargestellt). Im Ausführungsbeispiel der Figur 1 ist dargestellt, dass jedem Slave 100, 200, 300, 400, 500, 600 jeweils eine Schaltvorrichtung 871, 872, 873, 874, 875, 876 zugehörig ist.

Durch die Synchronisierung der Zeitgeber 140, 240, 340, 440, 540, 640 in den Slaves 100, 200, 300, 400, 500, 600 kann eine Bussystemzeit erreicht werden, wobei die einzelnen Zeiten der Zeitgeber 140, 240, 340, 440, 540, 640 der Slaves 100, 200, 300, 400, 500, 600 nur um einen kleinen Fehler voneinander abweichen. Durch das zuvor beschriebene Bussystem 1 kann nach Messung durch die Anmelderin ein Fehler kleiner 10 ns erzielt werden.

Das Bussystem 1 gemäß dem Ausführungsbeispiel der Figur 1 wird häufig zur Steuerung eines Prozesses verwendet. Durch Sensoren oder andere Erfassungsgeräte soll ein Prozessbild zu einem Zeitpunkt bestimmt werden. Dabei sollen möglichst alle zum Prozess gehörigen analogen und digitalen Werte über die Eingänge 191, 291, 391, etc. möglichst zeitgleich ermittelt werden. Entsprechend wird für alle Slaves 100, 200, 300, 400, 500, 600 ein allgemeiner Abtastzeitpunkt GSP (engl. Global Sampling Point) festgelegt. Je genauer die Zeitgeber 140, 240, 340, 440, 540, 640 der Slaves 100, 200, 300, 400, 500, 600 synchronisiert sind, umso geringer ist der zeitliche Fehler der Abtastzeitpunkte unterschiedlicher Slaves 100, 200, 300, 400, 500, 600 untereinander. Gleiches gilt für die Steuerung von Aktoren über die Ausgänge 192, 292, 392, etc., wobei die Ausgabezeitpunkte für analoge oder digitale Ausgangssignale auf den Zeitgebern 140, 240, 340, 440, 540, 640 der Slaves 100, 200, 300, 400, 500, 600 basieren.

Ein Vorteil des Ausführungsbeispiels der Figur 1 ist es, dass das Bussystem 1 im laufenden Betrieb geändert werden kann, wobei mittels der jedem Slave 100, 200, 300, 400, 500, 600 zugeordneten Schaltvorrichtung 871, 872, 873, 874, 875, 876 ein Bypass für die Buskommunikation aktiviert werden kann, so dass der Bus 800 nicht unterbrochen wird, wenn ein Slave z.B. 100 aus dem Bus 800 entfernt wird. Wird beispielsweise der erste Slave 100 entfernt und der Bypass durch Schließen der Schaltvorrichtung 871 aktiviert, so gelangt das Datenpaket P mit dem Zeitstempelwert TS1 vom Master 900 unmittelbar zum zweiten Slave 200. Damit erreicht das Datenpaket P den zweiten Slave 200 zeitlich früher, wobei die durch den ersten Slave 100 verursachte Laufzeitverzögerung für das Datenpaket P fast vollständig entfällt. Zugleich entfällt jedoch auch die Änderung des Zeitstempelwerts TS1 durch den ersten Slave 100, wobei sich Laufzeitverzögerung und Änderung des Zeitstempelwerts TS1 idealerweise nahezu vollständig aufheben. Entsprechend erhält der zweite Slave 200 trotz Entfernen des ersten Slaves 100 im laufenden Betrieb den richtigen Zeitstempelwert, so dass der Global Sampling Point für alle verbliebenen Slaves 200, 300, 400, 500, 600 unverändert ist, Fehler und Unstetigkeiten im Prozess sind minimiert. Wird ein Slave in den Bus 800 hinzugefügt, verursacht der hinzugefügte Slave eine Laufzeitverzögerung des Datenpakets P. Ist im hinzugefügten Slave ein zur Laufzeitverzögerung passender Korrekturwert im Speicherbereich hinterlegt, wird der empfangene Zeitstempelwert sofort durch den Korrekturwert geändert, so dass sich Laufzeitverzögerung und Änderung des Zeitstempelwerts wiederum weit überwiegend oder idealerweise vollständig aufheben. Auch in diesem Fall sind Fehler und Unstetigkeiten im Prozess minimiert.

Im Ausführungsbeispiel der Figur 1 weist der Master 900 einen Master-Zeitgeber 940 auf. Der Master 900 ist dabei eingerichtet, das Datenpaket P zu erzeugen und den Zeitstempelwert TS1 basierend auf dem Master-Zeitgeber 940 zu bestimmen und in das Datenpaket P einzugeben. Da ausschließlich der Master 900 dazu eingerichtet ist, das Datenpaket P zu erzeugen, kann eine Verzögerung verursacht durch den Start des Datenpakets P und ggf. der Einfügung des Zeitstempelwerts TS1 bei der Bestimmung des Zeitstempelwerts TS1 vom Master 900 unmittelbar berücksichtigt werden. Arbeitet der Master 900 zugleich als Speicher-Programmierbare-Steuerung (SPS) ohne Ankopplung an einen übergeordneten Bus, so kann der Master 900 im Master-Zeitgeber 940 die Bussystemzeit autark festlegen. Im Ausführungsbeispiel der Figur 1 ist jedoch vorgesehen, dass der Master 900 eine weitere Sende-Empfangs-Schaltung 980 zu Kommunikation über einen übergeordneten Bus 700 aufweist. Der übergeordnete Bus 700 kann auch als Feldbus bezeichnet werden. Der übergeordnete Bus 700 ist beispielweise als ProfiNet, EthernetCAT, Industrial Ethernet, etc. ausgebildet.

Im Ausführungsbeispiel der Figur 1 ist der Master 900 eingerichtet, basierend auf einem über den übergeordneten Bus 700 empfangenen Telegramm (nicht dargestellt) seinen Master-Zeitgeber 940 zu synchronisieren. Das Telegramm ist beispielweise ein Ethernet-Telegramm und damit unabhängig vom Datenpaket P. Entsprechend sind das Telegramm und das Datenpaket P unterschiedlich und werden von unterschiedlichen Geräten erzeugt. Es können auch die Protokolle des Telegramms und des Datenpakets P unterschiedlich sein.

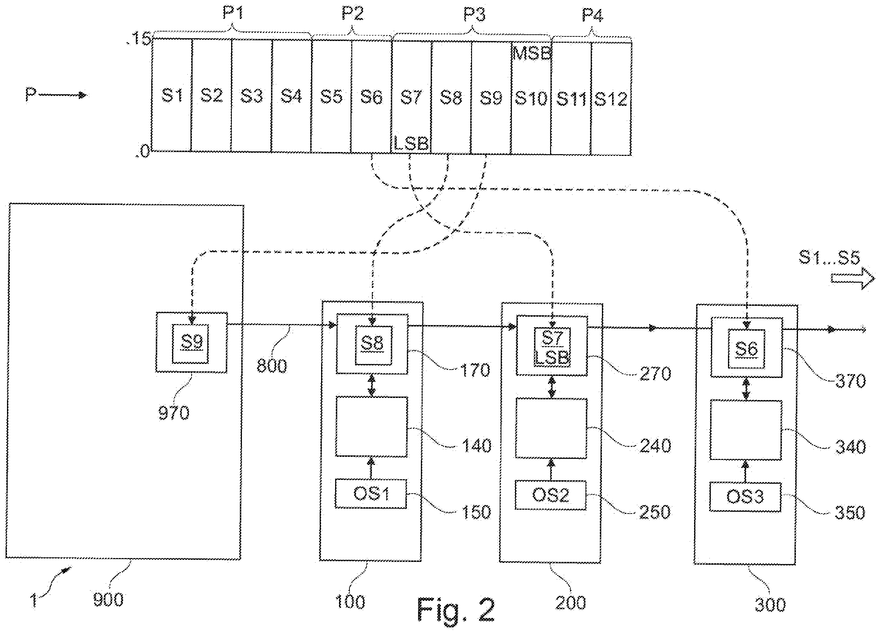

Figur 2 zeigt ein anderes Ausführungsbeispiel eines Bussystems 1 mit einer schematischen Darstellung eines Datenpakets P. Das Datenpaket P weist einen zu Beginn zu übertragenden Kopf P1, zwei Datenfelder P2, P3 und einen Tail P4, beispielweise mit einem CRC-Prüfwert auf. Das Datenpaket P wird in Datensymbolen S1 bis S12 zu je 16 Bits übertragen. Die Datensymbole S1 bis S12 werden dabei in einer festen Reihenfolge übertragen, wobei im Ausführungsbeispiel der Figur 2 die Übertragung mit dem ersten Datensymbol S1 beginnt und mit dem letzten Datensymbol S12 endet. Die Datensymbole S7, S8, S9 und S10 umfassen dabei einen Zeitstempelwert, wobei das Datensymbol S7 das niedrigstwertige Bit LSB (LSB - engl. Least Significant Bit) und das Datensymbol S10 das höchstwertige Bit MSB (MSB - engl. Most Significant Bit) des Zeitstempelwerts umfasst.

Dargestellt ist in Figur 2 ebenfalls das Bussystem 1 mit einem Master 900 mit einer Sende-Empfangs-Schaltung 970. Das Bussystem 1 im Ausführungsbeispiel der Figur 2 zeigt 3 Slaves 100, 200, 300, jedes Slave 100, 200, 300 weist eine Sende-Empfangs-Schaltung 170, 270, 370 zur Übertragung des Datenpakets P über den Bus 800 auf. Zur Übertragung sind die Slaves 100, 200, 300 eingerichtet, das Datenpaket P durch die Slaves 100, 200, 300 durchzuleiten, und zwar in einer festen Reihenfolge der Slaves 100, 200, 300. Im Ausführungsbeispiel der Figur 2 ist die feste Reihenfolge erster Slave 100, danach zweiter Slave 200, danach dritter Slave 300 beispielhaft dargestellt.

Dabei ist zu einem momentanen Zeitpunkt nur ein Teil des Datenpakets P in einem der Slaves 100, 200, 300, während ein vorausgehender Teil des Datenpakets P bereits im nachfolgenden Slave ist. Teile des Datenpakets P umfassen im Ausführungsbeispiel der Figur 2 eine Anzahl von Datensymbolen S1 bis S12. In Figur 2 ist beispielhaft für einen momentanen Zeitpunkt gezeigt, dass das sechste Datensymbol S6 in der Sende-Empfangs-Schaltung 370 des dritten Slaves 300, das folgende siebte Datensymbol S7 mit dem niedrigsten Stellenwert LSB des Zeitstempelwerts in der Sende-Empfangs-Schaltung 270 des zweiten Slaves 200, und das achte Datensymbol S8 in der Sende-Empfangs-Schaltung 170 des ersten Slaves 100 ist. Entsprechend ist jeder Slave 100, 200, 300 eingerichtet, das vom Zeitstempelwert zuerst empfangene Datensymbol S7 mit einem niedrigsten Stellenwert LSB des Zeitstempelwerts zu ändern und an einen nachfolgenden Teilnehmer, hier an den dritten Slave 300 zu senden, bevor das Datensymbol S10 mit einem höchsten Stellenwert MSB des Zeitstempelwerts empfangen wird.

Die Datensymbole S1 bis S5 sind bereits in folgenden, in Figur 2 nicht dargestellten Slaves. Das neunte Datensymbol S9 ist in der Sende-Empfangs-Schaltung 970 des Masters 900. Die übrigen Datensymbole S10 bis S12 liegen in Registern des Masters 900 (nicht dargestellt). Zur Veranschaulichung sind die genannten Datensymbole S6 bis S9 durch strichlinierte Pfeile mit den schematisch in den Sende-Empfangs-Schaltungen 970, 170, 270, 370 dargestellten Datensymbolen S6 bis S9 verknüpft.

Wird zeitlich nachfolgend das Datenpaket P weiter übertragen, gelangt das neunte Datensymbol S9 von der Sende-Empfangs-Schaltung 970 des Masters 900 zur Sende-Empfangs-Schaltung 170 des ersten Slaves 100, das achte Datensymbol S8 von der Sende-Empfangs-Schaltung 170 des ersten Slaves 100 zur Sende-Empfangs-Schaltung 270 des zweiten Slaves 200, usw.. Jede Sende-Empfangs-Schaltung 170, 270, 370 der Slaves 100, 200, 300 ist also eingerichtet, das Datenpaket P symbolweise zu empfangen und zu senden. Das Senden eines Datensymbols S1 ... S12 des Datenpakets P und das Empfangen eines nachfolgenden Datensymbols des Datenpakets P erfolgen im Ausführungsbeispiel der Figur 2 gleichzeitig.

Im in Figur 2 dargestellten momentanen Zeitpunkt wird das siebte Datensymbol S7 mit dem LSB gerade durch den Zeitgeber 240 des zweiten Slaves 200 geändert. Die Änderung erfolgt basierend auf dem Korrekturwert OS2 der im Speicherbereich 250 des zweiten Slaves gespeichert ist. Das siebte Datensymbol S7 wurde zuvor bereits durch das erste Slave 100 geändert (in Figur 2 nicht dargestellt). Der geänderte Zeitstempelwert wird dabei durch eine Funktion mit dem empfangenen Zeitstempelwert und dem Korrekturwert OS1, OS2, OS3 etc. bestimmt. Im einfachsten Falle wird der geänderte Zeitstempelwert durch eine Summe aus empfangenem Zeitstempelwert und Korrekturwert OS1, OS2, OS3 bestimmt. Natürlich sind auch andere, beispielsweise komplexere Funktionen prinzipiell möglich. Im Ausführungsbeispiel der Figur 2 weist das Datenpaket P eine Vielzahl von Datensymbolen S1 bis S15 auf, wobei jedes Datensymbol S1 bis S15 eine insbesondere feste Anzahl von 16 Bits aufweist. Alternativ können die Datensymbole auch eine andere feste Anzahl von beispielweise 8 oder 32 Bit aufweisen (in Figur 2 nicht dargestellt).

In Figur 3 ist ein Teilnehmer 100 eines Bussystems schematisch dargestellt. Der Teilnehmer 100 weist einen Zeitgeber 140 und eine Sende-Empfangs-Schaltung 170 auf. Im Ausführungsbeispiel der Figur 3 weist der Teilnehmer 100 weiterhin eine Mehrzahl von Rechenschaltungen 110, 120, 130, insbesondere State-Machines zur Kommunikation und/oder zur Paketverarbeitung von Datenpaketen unterschiedlichen Typs auf, beispielweise um Prozessdaten zu empfangen, zu verarbeiten oder zu senden. Die Sende-Empfangs-Schaltung 170 ist eingerichtet, ein Datenpaket P mit einem Zeitstempelwert TS1 über einen Bus 800 zu empfangen. Der Zeitgeber 140 ist zur Synchronisation basierend auf dem Zeitstempelwert TS1 eingerichtet. Zudem ist der Zeitgeber 140 eingerichtet, den Zeitstempelwert TS1 in einen geänderten Zeitstempelwert TS2 zu ändern. Die Sende-Empfangs-Schaltung 170 ist eingerichtet, das Datenpaket P mit geändertem Zeitstempelwert TS2 über den Bus 800 zu senden.

Im Ausführungsbeispiel der Figur 3 weist der Zeitgeber 140 des Teilnehmers 100 einen Zeitzähler 146 auf. Der Zeitzähler 146 gibt die Zeit als Digitalwert aus, beispielsweise in Nanosekunden. Weiterhin weist der Zeitgeber 140 eine State-Machine 145 auf. Die State-Machine 145 ist mit dem Zeitzähler 146 verbunden und eingerichtet, zur Synchronisation des Zeitzählers 146 basierend auf dem empfangenen Zeitstempelwert TS1. Das Datenpaket P enthält weiterhin einen Geschwindigkeitswert V, der mit dem Datenpaket P empfangen und von der State-Machine 145 des Zeitgebers 140 genutzt wird, um die Geschwindigkeit des Zeitzählers 146 einzustellen. Beispielweise kann durch den Geschwindigkeitswert V ein Zählinkrement des Zeitzählers 146 eingestellt werden.

Die State-Machine 145 ist zudem mit einem Speicherbereich 150 verbunden und eingerichtet, zur Änderung des empfangenen Zeitstempelwerts TS1. Der Speicherbereich ist im Ausführungsbeispiel der Figur 3 Bestandteil eines nicht-flüchtigen Speichers zur Speicherung eines Korrekturwerts OS1 auf dem die Änderung des empfangenen Zeitstempelwerts TS1 basiert. Die State-Machine 145 ist im Ausführungsbeispiel der Figur 3 eingerichtet, zu dem empfangenen Zeitstempelwert TS1 den Korrekturwert OS1 zu addieren. Die Summe der Addition wird als geänderter Zeitstempelwert TS2 in das zu sendende Datenpaket P eingefügt, indem der empfangene Zeitstempelwert TS1 beispielweise durch den geänderten Zeitstempelwert TS2 überschrieben wird.

In Verbindung mit dem Teilnehmer 100 ist in Figur 3 ein schematisches Zeitdiagramm mit der Zeit t und den Verzögerungen d10 und d19 dargestellt. Gelangt das Datenpaket P an den Eingang der Sende-Empfangs-Schaltung 170 des Teilnehmers 100, erfährt dies eine Laufzeitverzögerung d bis dasselbe Datenpaket P an einem Eingang des nachfolgenden Teilnehmers 200 anliegt. Die gesamte, dem Teilnehmer 100 zuzuordnende Laufzeitverzögerung d ist die Summe aus der durch die Verarbeitung des Datenpakets P durch Schaltkreise des Teilnehmers 100 verursachen Laufzeitverzögerung d10 und der durch die physikalische Übertragungsstrecke 810 zum nächsten Teilnehmer 200 verursachte Laufzeitverzögerung d19.

Die durch den Teilnehmer 100 verursachte Laufzeitverzögerung d sollte vor dem Empfang des Datenpakets P ermittelt werden. Beispielweise wird die Laufzeitverzögerung d bei der Herstellung oder werkseitiger Konfiguration ermittelt und im Teilnehmer 100 gespeichert. Alternativ kann die Laufzeitverzögerung d während des Betriebs oder während einer Einrichtung des Bussystems erfolgen. Beispielweise erfolgt die Ermittlung der Laufzeitverzögerung d durch den Teilnehmer selbst, durch einen anderen Teilnehmer im Bussystem oder durch ein separates Gerät (in Figur 3 nicht dargestellt). Nach der Ermittlung der Laufzeitverzögerung d wird basierend auf der ermittelten Laufzeitverzögerung d ein Korrekturwert OS1 ermittelt. Im einfachsten Fall entspricht der Korrekturwert OS1 der ermittelten Laufzeitverzögerung d, es können je nach Ausbildung beispielsweise der physikalischen Übertragungsstrecke 810 eine Anzahl weiterer Werte oder Faktoren in die Ermittlung des Korrekturwertes OS1 einfließen. Der Korrekturwert OS1 wird in dem Speicherbereich 150 gespeichert und ist durch den Zeitgeber 140 auslesbar. Der Speicherbereich 150 ist beispielweise ein Register innerhalb eines ASICs oder FPGAs. Ist der Korrekturwert OS1 im Speicherbereich gespeichert, basiert für jedes empfangene Datenpaket P mit Zeitstempelwert TS1 die Änderung des Zeitstempelwerts TS1 auf dem gespeicherten Korrekturwert OS1.

Bei einem Slave 100 gemäß dem Ausführungsbeispiel der Figur 1 wird vorgeschlagen, dass der Slave 100 eine Takt-Synchronisationseinheit (nicht dargestellt) zur Takt-Synchronisation eines Taktgebers (nicht dargestellt) auf das Taktsignal des übergeordneten Masters 900 hat. Diese Takt-Synchronisationseinheit ist dann zur Detektion von Transitionen in dem am Downstream-Datenbuseingang empfangenen Downstream-Datenstrom, zur Regelung der Frequenz des internen Taktsignals in Abhängigkeit der detektierten Transitionen und zur Einstellung einer definierten Phasenlage des internen Taktsignals zu den detektierten Transitionen eingerichtet. Unter Transition im Sinne des Ausführungsbeispiels der Figur 1 wird jede charakteristische Signaländerung im Datenstrom verstanden, die zur Takt-Synchronisation des Taktgebers auf das Taktsignal des übergeordneten Masters 900 genutzt werden kann. Diese Transitionen sind in der Praxis bevorzugt Signalflanken eines digitalen Signals beim Wechsel z. B. vom Low-Signalpegel in einen High-Signalpegel, d. h. beim Wechsel von einer digitalen Null in eine digitale Eins oder umgekehrt. Als Transitionen können aber auch andere charakteristische Signalmuster genutzt werden, deren Signalzeitpunkt mit einer zur Synchronisation erforderlichen Genauigkeit feststellbar ist.

Damit werden charakteristische Signalwechsel in einem Downstream-Datenstrom, der von dem übergeordneten Master 900 an den Slave 100 weitergegeben und damit vom Slave 100 empfangen wird, erkannt. Auf Grundlage der detektierten Transitionen wird dann eine definierte Phasenlage des internen Taktsignals in Bezug auf die detektierten Transitionen eingestellt. Das heißt, dass der Zeitpunkt eines charakteristischen Signalwechsels in dem Downstream-Datenstrom die Grundlage zur Takt-Synchronisation des Taktgebers derart gibt, dass der detektierte Zeitpunkt einer Transition als Takt-Synchronisationszeitpunkt angenommen wird, auf den die Phasenlage des internen Taktsignals geregelt wird.

So wird durch die Synchronisationseinrichtung die Phasenlage der Transitionen im Downstream-Datenstrom relativ zum Slave-eigenen Takt gemessen und die Frequenz des Slave-eigenen Taktgebers so geregelt, dass diese Taktgeberfrequenz möglichst exakt der im Downstream-Datenbussignal verborgenen Taktes entspricht und sich eine definierte Phasenlage zwischen den Flankenwechseln im Downstream-Datenbustrom und im eigenen internen Takt ergibt. Die im Downstream-Datenstrom detektierten Transitionen werden somit als Takt-Synchronisationsinformation zur Einstellung des Slave-internen Taktsignals des Taktgebers genutzt.

Im Vergleich zu einer separaten Synchronisationsnachricht oder Synchronisationsleitung hat die vorgeschlagene, auf den Downstream-Datenstrom eines übergeordneten Masters 900 bezogene Takt-Synchronisation den Vorteil, dass jeder Slave 100, 200, 300, 400, 500, 600 eines komplexeren Bussystems 1 ihre Slave-Taktgeber (in Figur 1 nicht dargestellt) dann immer jeweils auf ihren benachbarten vorhergehenden Slave 100, 200, 300, 400, 500 takt-synchronisieren und sich dann im Ergebnis bei allen Slaves 100, 200, 300, 400, 500, 600 in einem Netzwerk unabhängig von der Verschaltung und ohne Probleme durch Laufzeitverschiebungen und ohne separate Takt-Synchronisationsleitung die exakt gleiche Frequenz der internen Taktgeber einstellt. Lediglich die Phasenlage zwischen den Takten ist aufgrund von Laufzeiten auf den Leitungen 810 sowie Latenzen der Slaves 100, 200, 300, 400, 500, 600 nicht definiert. Da jeder Slave 100, 200, 300, 400, 500, 600 den Takt seines Empfängers auf die Flanken im ankommenden Datenstrom synchronisiert und die Phasenlage des Taktes im Sender des übergeordneten Masters 900 keine Rolle spielt, stellt eine ungleiche Phasenlage der Takte der Slaves 100, 200, 300, 400, 500, 600 im Bussystem 1 kein Problem dar.

Besonders vorteilhaft ist es, wenn die Datenbusschnittstelle bidirektional ist und weiterhin einen Upstream-Datenbusausgang zum Senden von Daten an einen übergeordneten Master 900 hat. Der Slave 100, 200, 300, 400, 500, 600 ist damit nicht nur zum Empfangen von Daten von einem übergeordneten Master 900 im Downstream-Datenstrom sondern zum (Zurück-)Senden von Daten an den übergeordneten Master 900 im Upstream-Datenstrom eingerichtet. Beispielsweise hat jeder Slave 100, 200, 300, 400, 500, 600 eine Phasenlage Korrektureinheit (in Figur 1 nicht dargestellt) zur Detektion von Transitionen in dem über den Upstream-Datenbuseingang (nicht dargestellt) vom benachbarten Slave empfangbaren Datenstrom und zum Verzögerns dieses Upstream-Datenstroms in Abhängigkeit der Detektion derart, dass eine definierte Phasenlage des internen Taktsignals zu den Transitionen des verzögerten Datenstroms eingestellt wird. Die Phasenlage-Korrektureinheit kann die Phasenlage des am Upstream-Datenbuseingang empfangenen Datenstroms z.B. mit Hilfe einer Delayline bestimmen und den Datenstrom nach einer Phasenkorrektur über seinen Upstream-Datenbusausgang an einen weiteren Slave bzw. an den Master 900 ausgeben.

Da die Taktfrequenz des internen Taktgebers, d. h. die Frequenz und Phasenlage des internen Taktsignals, bereits auf den ersten Downstream-Datenstrom eingestellt ist, lässt sich für den Upstream-Datenstrom keine Einstellung des Taktgebers auch auf den UpstreamDatenstrom erreichen. Daher wird stattdessen vorgeschlagen, mit Hilfe der Phasenlage-Korrektureinheit den empfangenen Upstream-Datenstrom im Slave 100, 200, 300, 400, 500, 600, d.h. im Empfänger, insgesamt so zu verzögern, dass sich auch hier eine definierte Phasenlage zwischen den auf dem Downstream-Datenstrom eingestellten internen Taktsignals zu dem Upstream-Datenstrom einstellt. Damit ist der vom benachbarten Slave empfangene Upstream-Datenstrom auf den vom Master 900 empfangenen Downstream-Datenstrom ebenfalls takt-synchronisiert und Taktfrequenz und Phasenlage abgestimmt.

Die Verzögerung des Upstream-Datenstroms kann beispielsweise durch Einfügen von Verzögerungselementen (in Figur 1 nicht dargestellt) oder -daten in den Upstream-Datenstrom erfolgen. Vorteilhaft ist es, wenn der Datenstrom nicht verändert wird, sondern eine elektrische Durchlaufverzögerung des Datensignals z.B. mit in Reihe geschalteten Verzögerungselementen vorgenommen wird. Solche Verzögerungselemente können z.B. Look-UpTabellen (LUTs) in einem FPGA (Field Programmable Gate Array) oder Gatter in einem ASIC (Anwenderspezifische Integrierte Schaltung) sein. Die Takt-Synchronisationseinheit und die Phasenlage-Korrektureinheit können als separate Hardwareschaltungen ausgeführt sein. Denkbar ist aber auch, dass Takt-Synchronisationseinheit und Phasenlage-Korrektureinheit als Softwarelogik realisiert wird, die auf gemeinsame oder getrennte Hardwareplattformen, wie Mikrokontrollern, Prozessoren oder FPGAs ausgeführt werden.

Die Takt-Synchronisationseinheit und/oder die Phasenlage-Korrektureinheit sind vorzugsweise zur Einstellung einer definierten Phasenlage im Bereich von 90° bis 270° und bevorzugt im Bereich von etwa 180° eingerichtet. Die definierte Phasenlage sollte dabei so eingestellt werden, dass eine Abtastung des Nutzsignals möglichst fehlerfrei gewährleistet werden kann. Bei der seriellen Datenübertragung in einem Datenstrom sind Flankensteilheit, Einschwingvorgänge und Phasenjitter oftmals zu beachten, die eine Signalabtastung nicht unmittelbar nach einem Signalwechsel erlauben. Die sicherste Abtastung eines seriellen Datensignals ist daher zeitlich genau zwischen dem Einschalten eines High- und/oder LowDatensignals und dem Ausschalten, d. h. genau zwischen den Umschaltzeitpunkten oder Transitionen eines Datenwortes sichergestellt, dies entspricht einer Phasenlage von 180°.

Das Verfahren zur Takt-Synchronisation von Teilnehmern 100, 200, 300, 400, 500, 600 eines Bussystems 1 hat die Schritte: - Empfang eines Downstream-Datenstroms von einem vorhergehenden Teilnehmer 100, 200, 300, 400, 500, 600 durch einen folgenden Teilnehmer 100, 200, 300, 400, 500, 600 über einen Downstream-Datenbuseingang; - Detektieren von Transitionen in dem am Downstream-Datenbuseingang empfangenen Downstream-Datenstrom; - Takt-synchronisieren eines internen Taktsignals eines Taktgebers (in Figur 1 nicht dargestellt) des nachfolgenden Teilnehmers 100, 200, 300, 400, 500, 600 in Abhängigkeit der detektierten Transitionen und - Einstellen einer definierten Phasenlage des takt-synchronisierten internen Taktsignals zu den detektierten Transitionen. Bevorzugt ist im Ausführungsbeispiel der Figur 1 daher vorgesehen, dass sowohl die Takt-Synchronisation eines internen Taktsignals eines Taktgebers des Slaves 100, 200, 300, 400, 500, 600 erfolgt, als auch ein Zeitgeber 140 durch einen empfangenen Zeitstempelwert TS1 synchronisierbar ist. Hierdurch kann im Ausführungsbeispiel der Figur 1 ein besonders exakter Gleichlauf der Zeitgeber 140 in allen Slaves 100, 200, 300, 400, 500, 600 erzielt werden.

### Bezugszeichenliste

- 1: Bussystem
- 100, 200, 300, 400, 500, 600: Teilnehmer, Slave
- 110, 120, 130 140, 240, 340, 440, 540, 640: State-Machine, Rechenschaltung Zeitgeber
- 145: State-Machine / Automat
- 146: Zeitzähler
- 150, 250, 350, 450, 550, 650: Speicherbereich, Register
- 170, 270, 370, 470, 570, 670: Sende-Empfangs-Schaltung
- 180, 280, 380, 480, 580, 680: Schnittstelle, elektrisch und mechanisch
- 190, 290, 390, 490, 590, 690: Eingangs-Ausgangs-Schaltung
- 191, 192, 291, 292, 391, 392,: Anschluss
- 491, 492, 591, 592, 691, 692: Anschluss
- 700: übergeordneter Bus, Feldbus
- 800: Bus, Lokalbus
- 810: physikalische Übertragungsstrecke, Leitung
- 871, 872, 873, 874, 875, 876: Schaltvorrichtung
- 900: Master, Koppler
- 940: Master-Zeitgeber
- 970, 980: Sende-Empfangs-Schaltung
- P: Datenpaket
- P1, P2, P3, P4: Datenpaketfelder
- TS1, TS2, TS3: Zeitstempelwert

## Patentansprüche

1. Teilnehmer (100) eines Bussystems (1),
- mit einem Zeitgeber (140),
- mit einer Sende-Empfangs-Schaltung (170),
- bei dem die Sende-Empfangs-Schaltung (170) eingerichtet ist, ein Datenpaket (P) mit einem Zeitstempelwert (TS1) über einen Bus (800) zu empfangen, wobei das Datenpaket (P) mehrere Datenfelder (P1, P2, P3, P4) umfasst und eines der Datenfelder (P3) den Zeitstempelwert (TS1) enthält,
- bei dem der Zeitgeber (140) eingerichtet ist, zur Synchronisation basierend auf dem Zeitstempelwert (TS1),
- bei dem der Zeitgeber (140) eingerichtet ist, den Zeitstempelwert (TS1) zu ändern, und
- bei dem die Sende-Empfangs-Schaltung (170) eingerichtet ist, dasselbe Datenpaket (P), das auch empfangen wurde, über den Bus (800) zu senden, jedoch mit geändertem Zeitstempelwert (TS2),
wobei der Teilnehmer (100) eingerichtet ist, in einem empfangenen Datenpaket (P) in dem Datenfeld (P3), welches den Zeitstempelwert (TS1) enthält, lediglich den Zeitstempelwert (TS1) zu ändern.

2. Teilnehmer (100) nach Anspruch 1,
- bei dem die Sende-Empfangs-Schaltung (170) eingerichtet ist, einen ersten Teil (S1...S12) des Datenpakets (P) über den Bus (800) zu senden und zeitgleich einen zweiten Teil (S1...S12) des Datenpakets (P) über den Bus (800) zu empfangen.

3. Teilnehmer (100) nach einem der vorhergehenden Ansprüche,
- bei dem das Datenpaket (P) eine Vielzahl von Datensymbolen (S1...S12) aufweist, wobei ein Datensymbol (S1...S12) eine insbesondere feste Anzahl von Bits aufweist,
- bei dem der Zeitstempelwert (TS1) des Datenpakets (P) eine Mehrzahl von Datensymbolen (S1...S12) aufweist, und
- bei dem die Sende-Empfangs-Schaltung (170) eingerichtet ist, das Datenpaket (P) symbolweise zu empfangen und zu senden, insbesondere derart, dass das Senden eines Datensymbols (S1...S12) des Datenpakets (P) und das Empfangen eines nachfolgenden Datensymbols (S1...S12) des Datenpakets (P) gleichzeitig erfolgen.

4. Teilnehmer (100) nach Anspruch 3,
- der eingerichtet ist, das vom Zeitstempelwert (TS1) zuerst empfangene Datensymbol (S7) mit einem niedrigsten Stellenwert (LSB) des Zeitstempelwerts (TS1) zu ändern und an einen nachfolgenden Teilnehmer (200) zu senden vor dem Empfang des Datensymbols (S10) mit einem höchsten Stellenwert (MSB) des Zeitstempelwerts (TS1).

5. Teilnehmer (100) nach einem der vorhergehenden Ansprüche,
- bei dem der Zeitgeber (140) einen Zeitzähler (146) aufweist,
- bei dem der Zeitgeber (140) eine State-Machine (145) aufweist, die eingerichtet ist, zur Synchronisation des Zeitzählers (146) basierend auf dem empfangenen Zeitstempelwert (TS1) und zur Änderung des Zeitstempelwerts (TS1).

6. Teilnehmer (100) nach einem der vorhergehenden Ansprüche,
- mit einem insbesondere nicht-flüchtigen Speicherbereich (150) zur Speicherung eines Korrekturwerts (OS1) auf dem die Änderung des Zeitstempelwerts (TS1) basiert.

7. Teilnehmer (100) nach Anspruch 6, bei dem
- der Korrekturwert (OS1) auf einer Verzögerung (d10) zwischen Empfang und Senden eines Beginns (S1) des Datenpakets (P) durch die Sende-Empfangs-Schaltung (170) und auf einer Verzögerung (d19) durch das Senden über eine Übertragungsstrecke (810) des Busses (800) insbesondere zum nachfolgenden Teilnehmer (200) basiert.

8. Teilnehmer (100) nach einem der Ansprüche 6 oder 7, bei dem
- der Korrekturwert (OS1) für aufeinander folgende Datenpakete (P) konstant ist.

9. Verfahren zum Betrieb eines Bussystems (1) mit einem ersten Teilnehmer (100) und einem zweiten Teilnehmer (200),
- bei dem ein Datenpaket (P) durch den ersten Teilnehmer (100) empfangen und gesendet wird,
- bei dem ein Zeitgeber (140) des ersten Teilnehmers (100) basierend auf einem im Datenpaket (P) enthaltenen Zeitstempelwert (TS1) synchronisiert wird, wobei das Datenpaket (P) mehrere Datenfelder (P1, P2, P3, P4) umfasst und der Zeitstempelwert (TS1) in einem der Datenfelder (P3) enthalten ist,
- bei dem in dem zugehörigen Datenfeld (P3), das den Zeitstempelwert (TS1) enthält, lediglich der Zeitstempelwert (TS1) durch den ersten Teilnehmer (100) geändert wird, und
- bei dem der geänderte Zeitstempelwert (TS2) mittels desselben Datenpakets (P), das empfangen worden ist, jedoch mit geändertem Zeitstempelwert (TS2), durch den ersten Teilnehmer (100) an den zweiten Teilnehmer (200) gesendet wird.

10. Verfahren nach Anspruch 9,
- bei dem der Zeitstempelwert (TS1) durch den ersten Teilnehmer (100) während des Sendens und des Empfangens des Datenpakets (P) geändert wird.

11. Verfahren nach einem der Ansprüche 9 oder 10,
- bei dem vor dem Empfang des Datenpakets (P) eine durch den ersten Teilnehmer (100) verursachte Laufzeitverzögerung (d10) ermittelt wird,
- bei dem basierend auf der ermittelten Laufzeitverzögerung (d10) ein Korrekturwert (OS1) ermittelt wird,
- bei dem der Korrekturwert (OS1) gespeichert wird, und
- bei dem die Änderung des Zeitstempelwerts (TS1) auf dem gespeicherten Korrekturwert (OS1) basiert.

12. Verfahren nach Anspruch 11,
- bei dem vor dem Empfang des Datenpakets (P) eine durch eine Übertragungsstrecke (810) zwischen dem ersten Teilnehmer (100) und dem zweiten Teilnehmer (200) verursachte weitere Laufzeitverzögerung (d19) ermittelt wird, und
- bei dem basierend auf der Laufzeitverzögerung (d10) und der weiteren Laufzeitverzögerung (d19) der Korrekturwert (OS1) ermittelt wird.

13. Verfahren nach einem der Ansprüche 9 bis 12,
- bei dem der geänderte Zeitstempelwert (TS2) durch eine Funktion mit dem empfangenen Zeitstempelwert (TS1) und dem Korrekturwert (OS1) bestimmt wird, insbesondere durch eine Summe aus empfangenem Zeitstempelwert (TS1) und Korrekturwert (OS1).

14. Bussystem (1)
- mit einem als ersten Slave ausgebildeten ersten Teilnehmer (100) gemäß einem der Ansprüche 1 bis 8,
- mit einem als zweiten Slave ausgebildeten zweiten Teilnehmer (200),
- mit einem Master (900) und
- mit einem Bus (800),
- bei dem der Master (900) und der erste Slave (100) und der zweite Slave (200) über den Bus (800) zur Übertragung eines Datenpakets (P) derart verbunden sind, dass das vom Master (900) gesendete Datenpaket (P) den ersten Slave (100) und den zweiten Slave (200) in einer festen Reihenfolge durchläuft,
- bei dem der Master (900) eingerichtet ist, in dem Datenpaket (P) einen Zeitstempelwert (TS1) zu senden,
- bei dem der erste Slave (100) eingerichtet ist, das Datenpaket (P) mit dem Zeitstempelwert (TS1) zu empfangen,
- bei dem der erste Slave (100) eingerichtet ist, seinen Zeitgeber (140) basierend auf dem Zeitstempelwert (TS1) zu synchronisieren,
- bei dem der erste Slave (100) eingerichtet ist, den Zeitstempelwert (TS1) zu ändern und den geänderten Zeitstempelwert (TS2) in dem Datenpaket (P) an den zweiten Slave (200) zu senden, und
- bei dem der zweite Slave (200) eingerichtet ist, das Datenpaket (P) mit dem geänderten Zeitstempelwert (TS2) zu empfangen und seinen Zeitgeber (240) basierend auf dem geänderten Zeitstempelwert (TS2) zu synchronisieren.

15. Bussystem (1) nach Anspruch 14,
- mit einer ersten Schnittstellenvorrichtung (180), wobei der erste Slave (100) aus dem Bussystem (1) durch Lösen von der Schnittstellenvorrichtung (180) entfernbar ist,
- bei dem die erste Schnittstellenvorrichtung (180) eine erste Schaltvorrichtung (871) aufweist, die einen Bypass zum zweiten Slave (200) bewirkt, damit das Datenpaket (P) bei entferntem ersten Slave (100) nicht vom ersten Slave (100) sondern vom zweiten Slave (200) mit nicht-geändertem Zeitstempelwert (TS1) empfangbar ist.

16. Bussystem (1) nach einem der vorhergehenden Ansprüche 14 oder 15,
- mit einer Anzahl weiterer Slaves (300, 400, 500, 600),
- bei dem das Datenpaket (P) alle Slaves (100, 200, 300, 400, 500, 600) des Bussystems (1) in einer festen Reihenfolge durchläuft,
- bei dem jeder Slave (100) eingerichtet ist, den Zeitstempelwert (TS1) im Datenpaket (P) zu ändern und den geänderten Zeitstempelwert (TS2) an den in der Reihenfolge nachfolgenden Slave über den Bus weiterzuleiten,
- bei dem der letzte Slave (600) in der Reihenfolge eingerichtet ist, das Datenpaket (P) über den Bus (800) zurück an den Master (900) zu senden.

17. Bussystem (1) nach einem der vorhergehenden Ansprüche 14 bis 16,
- bei dem der Master (900) einen Master-Zeitgeber (940) aufweist,
- bei dem der Master (900) eingerichtet ist, das Datenpaket (P) zu erzeugen und den Zeitstempelwert (TS1) basierend auf dem Master-Zeitgeber (940) zu bestimmen und in das Datenpaket (P) einzugeben.

18. Bussystem (1) nach Anspruch 17,
- bei dem der Master (900) eine Sende-Empfangs-Schaltung (980) zu einem übergeordneten Bus (700) aufweist,
- bei dem der Master (900) eingerichtet ist, basierend auf einem über den übergeordneten Bus (700) empfangenen Telegramm seinen Master-Zeitgeber (940) zu synchronisieren.

## Claims

1. Subscriber (100) in a bus system (1),
- having a timer (140),
- having a transmission-reception circuit (170),
- in which the transmission-reception circuit (170) is configured to receive a data packet (P) containing a timestamp value (TS1) via a bus (800), the data packet (P) comprising multiple data fields (P1, P2, P3, P4) and one of the data fields (P3) including the timestamp value (TS1),
- in which the timer (140) is configured for synchronization based on the timestamp value (TS1),
- in which the timer (140) is configured to modify the timestamp value (TS1), and
- in which the transmission-reception circuit (170) is configured to send via the bus (800) the same data packet (P) as was also received, but with a modified timestamp value (TS2),
wherein the subscriber (100) is configured to modify just the timestamp value (TS1) in a received data packet (P) in the data field (P3) that includes the timestamp value (TS1).

2. Subscriber (100) according to claim 1,
- in which the transmission-reception circuit (170) is configured to send a first portion (S1...S12) of the data packet (P) via the bus (800) and to receive a second portion (S1...S12) of the data packet (P) via the bus (800) simultaneously.

3. Subscriber (100) according to one of the preceding claims,
- in which the data packet (P) has a plurality of data symbols (S1...S12), a data symbol (S1...S12) having an in particular fixed number of bits,
- in which the timestamp value (TS1) of the data packet (P) has a plurality of data symbols (S1...S12), and
- in which the transmission-reception circuit (170) is configured to receive and to send the data packet (P) on a symbol-by-symbol basis, in particular in such a way that the sending of one data symbol (S1...S12) of the data packet (P) and the receiving of a subsequent data symbol (S1...S12) of the data packet (P) take place simultaneously.

4. Subscriber (100) according to claim 3,
- configured to modify the data symbol (S7) received first from the timestamp value (TS1), containing a least significant bit (LSB) of the timestamp value (TS1), and to send said data symbol to a subsequent subscriber (200) before receiving the data symbol (S10) containing a most significant bit (MSB) of the timestamp value (TS1).

5. Subscriber (100) according to one of the preceding claims,
- in which the timer (140) has a time counter (146),
- in which the timer (140) has a state machine (145) configured to synchronize the time counter (146) based on the received timestamp value (TS1) and to modify the timestamp value (TS1).

6. Subscriber (100) according to one of the preceding claims,
- having an in particular nonvolatile memory area (150) for storing a correction value (OS1) on which the modification of the timestamp value (TS1) is based.

7. Subscriber (100) according to claim 6, in which
- the correction value (OS1) is based on a delay (d10) between reception and sending of a beginning (S1) of the data packet (P) by the transmission-reception circuit (170) and on a delay (d19) as a result of the sending via a transmission link (810) of the bus (800) in particular to the subsequent subscriber (200).

8. Subscriber (100) according to one of the claims 6 or 7, in which
- the correction value (OS1) is constant for successive data packets (P).

9. Method for operating a bus system (1) having a first subscriber (100) and a second subscriber (200),
- in which a data packet (P) is received and sent by the first subscriber (100),
- in which a timer (140) of the first subscriber (100) is synchronized based on a timestamp value (TS1) included in the data packet (P), the data packet (P) comprising multiple data fields (P1, P2, P3, P4) and the timestamp value (TS1) being included in one of the data fields (P3),
- in which just the timestamp value (TS1) in the associated data field (P3) that includes the timestamp value (TS1) is modified by the first subscriber (100), and
- in which the modified timestamp value (TS2) is sent by the first subscriber (100) to the second subscriber (200) by means of the same data packet (P) as has been received, but with the modified timestamp value (TS2).

10. Method according to claim 9,
- in which the timestamp value (TS1) is modified by the first subscriber (100) while the data packet (P) is being sent and received.

11. Method according to one of the claims 9 or 10,
- in which a propagation delay (d10) caused by the first subscriber (100) is determined before the data packet (P) is received,
- in which a correction value (OS1) is determined based on the determined propagation delay (d10),
- in which the correction value (OS1) is stored, and
- in which the modification of the timestamp value (TS1) is based on the stored correction value (OS1) .

12. Method according to claim 11,
- in which a further propagation delay (d19) caused by a transmission link (810) between the first subscriber (100) and the second subscriber (200) is determined before the data packet (P) is received, and
- in which the correction value (OS1) is determined based on the propagation delay (d10) and the further propagation delay (d19).

13. Method according to any one of the claims 9 to 12,
- in which the modified timestamp value (TS2) is determined by a function containing the received timestamp value (TS1) and the correction value (OS1), in particular by a sum of the received timestamp value (TS1) and the correction value (OS1) .

14. Bus system (1)
- having a first subscriber (100) in the form of a first slave, according to any one of the claims 1 to 8,
- having a second subscriber (200) in the form of a second slave,
- having a master (900) and
- having a bus (800),
- in which the master (900) and the first slave (100) and the second slave (200) are connected via the bus (800) to transmit a data packet (P) in such a way that the data packet (P) sent by the master (900) passes through the first slave (100) and the second slave (200) in a fixed sequence,
- in which the master (900) is configured to send a timestamp value (TS1) in the data packet (P),
- in which the first slave (100) is configured to receive the data packet (P) containing the timestamp value (TS1),
- in which the first slave (100) is configured to synchronize its timer (140) based on the timestamp value (TS1),
- in which the first slave (100) is configured to modify the timestamp value (TS1) and to send the modified timestamp value (TS2) in the data packet (P) to the second slave (200), and
- in which the second slave (200) is configured to receive the data packet (P) containing the modified timestamp value (TS2) and to synchronize its timer (240) based on the modified timestamp value (TS2).

15. Bus system (1) according to claim 14,
- having a first interface apparatus (108), the first slave (100) being able to be removed from the bus system (1) by detaching it from the interface apparatus (180),
- in which the first interface apparatus (180) has a first switching apparatus (871) that brings about a bypass to the second slave (200) so that the data packet (P) is able to be received not by the first slave (100) but rather by the second slave (200) with the unmodified timestamp value (TS1) when the first slave (100) has been removed.

16. Bus system (1) according to any one of the preceding claims 14 or 15,
- having a number of further slaves (300, 400, 500, 600),
- in which the data packet (P) passes through all of the slaves (100, 200, 300, 400, 500, 600) of the bus system (1) in a fixed sequence,
- in which each slave (100) is configured to modify the timestamp value (TS1) in the data packet (P) and to forward the modified timestamp value (TS2) to the subsequent slave in the sequence via the bus,
- in which the last slave (600) in the sequence is configured to send the data packet (P) back to the master (900) via the bus (800).

17. Bus system (1) according to any one of the preceding claims 14 to 16,
- in which the master (900) has a master timer (940),
- in which the master (900) is configured to generate the data packet (P) and to determine the timestamp value (TS1) based on the master timer (940) and to input said timestamp value into the data packet (P).

18. Bus system (1) according to claim 17,
- in which the master (900) has a transmission-reception circuit (980) for a superordinate bus (700),
- in which the master (900) is configured to synchronize its master timer (940) based on a telegram received via the superordinate bus (700).

## Revendications

1. Périphérique (100) d'un système de bus (1),
- comprenant un générateur d'horloge (140),
- comprenant un circuit d'émission-réception (170),
- avec lequel le circuit d'émission-réception (170) est conçu pour recevoir un paquet de données (P) ayant une valeur d'horodatage (TS1) par le biais d'un bus (800), le paquet de données (P) comportant plusieurs champs de données (P1, P2, P3, P4) et l'un des champs de données (P3) contenant la valeur d'horodatage (TS1),
- avec lequel le générateur d'horloge (140) est conçu pour la synchronisation en se basant sur la valeur d'horodatage (TS1),
- avec lequel le générateur d'horloge (140) est conçu pour modifier la valeur d'horodatage (TS1), et
- avec lequel le circuit d'émission-réception (170) est conçu pour émettre le même paquet de données (P), qui a également été reçu, par le biais du bus (800), toutefois avec une valeur d'horodatage modifiée (TS2),
le périphérique (100) étant conçu pour, dans un paquet de données (P) reçu, modifier uniquement la valeur d'horodatage (TS1) dans le champ de données (P3) qui contient la valeur d'horodatage (TS1).

2. Périphérique (100) selon la revendication 1,
- avec lequel le circuit d'émission-réception (170) est conçu pour émettre une première partie (S1 ... S12) du paquet de données (P) par le biais du bus (800) et, simultanément, recevoir une deuxième partie (S1 ... S12) du paquet de données (P) par le biais du bus (800).

3. Périphérique (100) selon l'une des revendications précédentes,
- avec lequel le paquet de données (P) possède un grand nombre de symboles de données (S1 ... S12), un symbole de données (S1 ... S12) possédant un nombre de bits notamment fixe,
- avec lequel la valeur d'horodatage (TS1) du paquet de données (P) possède une pluralité de symboles de données (S1 ... S12), et
- avec lequel le circuit d'émission-réception (170) est conçu pour recevoir et émettre le paquet de données (P) symbole par symbole, notamment de telle sorte que l'émission d'un symbole de données (S1 ... S12) du paquet de données (P) et la réception d'un symbole de données (S1 ... S12) suivant du paquet de données (P) s'effectuent simultanément.

4. Périphérique (100) selon la revendication 3,
- lequel est conçu pour modifier le symbole de données (S7) reçu en premier de la valeur d'horodatage (TS1) ayant une valeur de poids faible (LSB) de la valeur d'horodatage (TS1) et l'émettre vers un périphérique suivant (200) avant la réception du symbole de données (S10) ayant une valeur de poids fort (MSB) de la valeur d'horodatage (TS1).

5. Périphérique (100) selon l'une des revendications précédentes,
- avec lequel le générateur d'horloge (140) possède un compteur de temps (146),
- avec lequel le générateur d'horloge (140) possède une machine à états (145), laquelle est conçue pour la synchronisation du compteur de temps (146) en se basant sur la valeur d'horodatage (TS1) reçue et pour la modification de la valeur d'horodatage (TS1).

6. Périphérique (100) selon l'une des revendications précédentes,
- comprenant une zone de mémoire (150), notamment non volatile, destinée à la mémorisation d'une valeur de correction (OS1) sur laquelle se base la modification de la valeur d'horodatage (TS1).

7. Périphérique (100) selon la revendication 6, avec lequel
- la valeur de correction (OS1) se base sur un retard (d10) entre la réception et l'émission d'un début (S1) du paquet de données (P) par le circuit d'émission-réception (170) et sur un retard (d19) par l'émission par le biais d'une liaison de transmission (810) du bus (800), notamment vers le périphérique suivant (200).

8. Périphérique (100) selon l'une des revendications 6 et 7, avec lequel
- la valeur de correction (OS1) pour les paquets de données (P) qui se suivent mutuellement est constante.

9. Procédé pour faire fonctionner un système de bus (1) comprenant un premier périphérique (100) et un deuxième périphérique (200),
- avec lequel un paquet de données (P) est reçu et émis par le premier périphérique (100),
- avec lequel un générateur d'horloge (140) du premier périphérique (100) est synchronisé en se basant sur une valeur d'horodatage (TS1) contenue dans le paquet de données (P), le paquet de données (P) comportant plusieurs champs de données (P1, P2, P3, P4) et la valeur d'horodatage (TS1) étant contenue dans l'un des champs de données (P3),
- avec lequel seule la valeur d'horodatage (TS1) est modifiée par le premier périphérique (100) dans le champ de données (P3) correspondant qui contient la valeur d'horodatage (TS1), et
- avec lequel la valeur d'horodatage modifiée (TS2) est émise au moyen du même paquet de données (P) qui a été reçu, toutefois avec la valeur d'horodatage modifiée (TS2), par le premier périphérique (100) vers le deuxième périphérique (200).

10. Procédé selon la revendication 9,
- avec lequel la valeur d'horodatage (TS1) est modifiée par le premier périphérique (100) pendant l'émission et la réception du paquet de données (P).

11. Procédé selon l'une des revendications 9 et 10,
- avec lequel un retard de temps de propagation (d10) provoqué par le premier périphérique (100) est identifié avant la réception du paquet de données (P),
- avec lequel une valeur de correction (OS1) est identifiée en se basant sur le retard de temps de propagation (d10) identifié,
- avec lequel la valeur de correction (OS1) est mémorisée, et
- avec lequel la modification de la valeur d'horodatage (TS1) se base sur la valeur de correction (OS1) mémorisée.

12. Procédé selon la revendication 11,
- avec lequel un retard de temps de propagation supplémentaire (d19), provoqué par une liaison de transmission (810) entre le premier périphérique (100) et le deuxième périphérique (200), est identifié avant la réception du paquet de données (P), et
- avec lequel la valeur de correction (OS1) est identifiée en se basant sur le retard de temps de propagation (d10) et le retard de temps de propagation supplémentaire (d19).

13. Procédé selon l'une des revendications 9 à 12,
- avec lequel la valeur d'horodatage modifiée (TS2) est déterminée par une fonction avec la valeur d'horodatage (TS1) reçue et la valeur de correction (OS1), notamment par une somme de la valeur d'horodatage (TS1) reçue et de la valeur de correction (OS1).

14. Système de bus (1)
- comprenant un premier périphérique (100) selon l'une des revendications 1 à 8, configuré en tant que premier esclave,
- comprenant un deuxième périphérique (200) configuré en tant que deuxième esclave,
- comprenant un maître (900) et
- comprenant un bus (800),
- avec lequel le maître (900) et le premier esclave (100) et le deuxième esclave (200) sont reliés par le biais du bus (800) en vue de la transmission d'un paquet de données (P) de telle sorte que le paquet de données (P) émis par le maître (900) traverse le premier esclave (100) et le deuxième esclave (200) dans un premier ordre fixe,
- avec lequel le maître (900) est conçu pour émettre une valeur d'horodatage (TS1) dans le paquet de données (P),
- avec lequel le premier esclave (100) est conçu pour recevoir le paquet de données (P) avec la valeur d'horodatage (TS1),
- avec lequel le premier esclave (100) est conçu pour synchroniser son générateur d'horloge (140) en se basant sur la valeur d'horodatage (TS1),
- avec lequel le premier esclave (100) est conçu pour modifier la valeur d'horodatage (TS1) et émettre la valeur d'horodatage modifiée (TS2) dans le paquet de données (P) vers le deuxième esclave (200), et
- avec lequel le deuxième esclave (200) est conçu pour recevoir le paquet de données (P) avec la valeur d'horodatage modifiée (TS2) et synchroniser son générateur d'horloge (240) en se basant sur la valeur d'horodatage modifiée (TS2).

15. Système de bus (1) selon la revendication 14,
- comprenant un premier dispositif d'interface (180), le premier esclave (100) pouvant être retiré du système de bus (1) en le détachant du dispositif d'interface (180),
- avec lequel le premier dispositif d'interface (180) possède un premier dispositif de commutation (871), lequel produit une dérivation vers le deuxième esclave (200) afin que le paquet de données (P), dans le cas où le premier esclave (100) est retiré, puisse être reçu non pas par le premier esclave (100), mais par le deuxième esclave (200) avec une valeur d'horodatage (TS1) non modifiée.

16. Système de bus (1) selon l'une des revendications précédentes 14 et 15,
- comprenant un certain nombre d'esclaves supplémentaires (300, 400, 500, 600),
- avec lequel le paquet de données (P) traverse tous les esclaves (100, 200, 300, 400, 500, 600) du système de bus (1) dans un ordre fixe,
- avec lequel chaque esclave (100) est conçu pour modifier la valeur d'horodatage (TS1) dans le paquet de données (P) et retransmettre la valeur d'horodatage modifiée (TS2) à l'esclave suivant dans l'ordre par le biais du bus,
- avec lequel le dernier esclave (600) dans l'ordre est conçu pour émettre le paquet de données (P) en retour vers le maître (900) par le biais du bus (800).

17. Système de bus (1) selon l'une des revendications précédentes 14 à 16,
- avec lequel le maître (900) possède un générateur d'horloge maître (940),
- avec lequel le maître (900) est conçu pour générer le paquet de données (P) et déterminer la valeur d'horodatage (TS1) en se basant sur le générateur d'horloge maître (940) et l'incorporer dans le paquet de données (P).

18. Système de bus (1) selon la revendication 17,
- avec lequel le maître (900) possède un circuit d'émission-réception (980) vers un bus de niveau supérieur (700),
- avec lequel le maître (900) est conçu pour synchroniser son générateur d'horloge maître (940) en se basant sur un télégramme reçu par le biais du bus de niveau supérieur (700).
